# EUROPÄISCHE PATENTSCHRIFT

(11) **EP 1 905 630 B1**
(45) Veröffentlichungstag und Bekanntmachung des Hinweises auf die Patenterteilung: **13.04.2011**
(21) Anmeldenummer: 07015764.9
(22) Anmeldetag: 10.08.2007
(51) Int. Cl.: B60J 7/00

(54) **Manuell betätiges Fensterrollo**
Manually operated window roller blind
Store de fenêtre actionné manuellement

(30) Priorität: 27.09.2006 DE 102006046064; 27.09.2006 DE 102006046069; 27.09.2006 DE 102006046065; 13.10.2006 DE 102006049065; 13.11.2006 DE 102006053680
(43) Veröffentlichungstag der Anmeldung: 02.04.2008
(73) Patentinhaber: BOS GmbH & Co. KG, 73760 Ostfildern (DE)
(72) Erfinder: Schlecht, Werner P., 71665 Vaihingen/Enz Aurich (DE)
(74) Vertreter: Rüger, Barthelt & Abel Patentanwälte

(56) Entgegenhaltungen:
- DE-A1- 10 324 545
- DE-A1- 19 834 777
- DE-A1-102004 036 392
- DE-A1-102004 038 756
- DE-A1-102004 046 783
- DE-U1- 20 309 690

## Beschreibung

In aller Regel sind manuell betätigte Fensterrollos im Aufbau etwas einfacher als elektrisch betriebene Fensterrollos. Elektrisch betriebene Fensterrollos benötigen einen Antriebsmotor, der die Kosten erhöht. Soweit sich ein Fensterrollo im Wirkbereich des Fahrers befindet, kann ohne weiteres auch ein manuell betätigtes Fensterrollo Verwendung finden. Bevorzugte Fensterrollos, die manuell betätigt werden können, sind Dachfensterrollos bei denen im Übrigen die Forderung besteht, dass sie in jeder beliebigen Zwischenstellung stehen bleiben können.

Die einfachste Form eines solchen Rollos sieht die Verwendung einer Wickelwelle vor, die mit Hilfe eines Federmotors im Aufwickelsinne der Rollobahn vorgespannt ist. Die von der Wickelwelle abliegende Kante der Rollobahn ist mit einem von Hand zu bedienende Zugstab verbunden, der in seitlichen Führungsschienen geführt ist. Bremseinrichtungen am Zugstab sollen dafür sorgen, dass der Zugstab in der jeweils gewünschten Position stehen bleibt und nicht durch den Federmotor in Richtung Wickelwelle bewegt wird. Die Bremswirkung muss hierzu verhältnismäßig kräftig ausgelegt werden, denn der Federmotor ist am Ende des Betätigungsweges, also bei voll ausgefahrenem Rollo, verhältnismäßig stark aufgezogen, selbst dann, wenn ein Federmotor mit flacher Kennlinie verwendet wird.

Außerdem unterscheidet sich bei einer solchen Anordnung die Zugspannung in der Rollobahn sehr stark, ob das Rollo ausgezogen oder weitgehend eingefahren ist.

Ein weiterer Nachteil besteht in der aufzubringenden Betätigungskraft, die wegen der zu überwindenden Bremse und der Kraft des Federmotors beim Ausfahren deutlich größer ist als beim Einfahren.

Um eine gleichmäßigere Betätigungskraft zu bekommen ist es deswegen aus der DE 10 2004 038 756 A1 bekannt, an den Enden des Zugstabs jeweils ein Seil angreifen zu lassen, dass von dem Zugstab zu dem aus der Sicht der Wickelwelle distalen Ende der Führungsschiene läuft. Dort wird das Zugseil umgelenkt und läuft zur Wickelwelle zurück. Koaxial zur Wickelwelle ist für jedes Zugseil eine Seilscheibe vorgesehen, auf die das Seil aufgewickelt wird. Zwischen der Seilscheibe und der Wickelwelle sitzt ein Federausgleich der nötig ist, die Längendifferenz zu kompensieren die entsteht, wenn die Rollobahn von der Wickelwelle abgewickelt wird, während andererseits das Zugseil mit konstantem Wirkradius auf die Seilscheibe aufgewickelt wird.

Diese Anordnung hat sich an sich recht gut bewährt, erfordert allerdings die Verwendung des Zugseils, das nicht einfach zu montieren ist.

In der DE 2004 036 392 A1 ist ein manuell betätigtes Rollo beschrieben. Zu diesem Rollo gehört eine rohrförmige Wickelwelle an der mit einer Kante die Rollobahn befestigt ist. Die andere Kante ist mit einem Zugspriegel verbunden, der längsverschieblich in zwei Führungsschienen geführt ist.

Durch das Wickelrohr führt eine Antriebswelle, die über eine Torsionsfeder kinematisch mit dem Wickelrohr verbunden ist.

Auf der Antriebswelle sitzen endseitig zwei Zahnriemenscheiben. Jede Zahnriemenscheibe dient dazu, einen offenen Zahnriemen anzutreiben, der in der betreffenden Führungsschiene zwischen der Riemenscheibe und dem Zugspriegel drucksteif und ausknicksicher geführt ist.

Mit Hilfe der in dem Wickelrohr untergebrachten Schraubenfeder soll in jeder Einstellung die Tuchspannung aufrecht erhalten werden.

Die Anordnung ist kompliziert in der Montage, und auch die Führungsschienen sind verhältnismäßig voluminös, weil das Leertrum des offenen Zahnriemens in der Führungsschiene geführt ist.

Darüber hinaus beschreibt die DE 20 2005 020 696 U1 ein elektrisch betätigtes Fensterrollo, bei dem ein einziger Antriebsmotor vorgesehen ist. Der Antriebsmotor sitzt etwa mittig neben der Wickelwelle. Sein Getriebegehäuse ist über zwei feste Führungsrohre mit den Führungsschienen verbunden um die Schubglieder darin ausknicksicher und drucksteif zu führen. Zur Aufnahme des Leertrums sind feste Speicherrohre vorgesehen. Die festen Speicherrohre müssen entsprechend dem Bauraum vorgeformt werden, was sowohl einbauseitig als auch herstellerseitig zusätzlichen Aufwand erfordert.

Ausgehend hiervon ist es Aufgabe der Erfindung ein manuell betätigtes Fensterrollo für Kraftfahrzeuge zu schaffen, das einen geringeren Herstellungs- und Einbauaufwand erfordert.

Diese Aufgabe wird erfindungsgemäß mit dem manuell betätigten Fensterrollo mit den Merkmalen des Anspruches 1 gelöst.

Bei dem neuen manuell betätigten Fensterrollo ist eine drehbar gelagerte Wickelwelle vorhanden. Die Rollobahn ist mit einer Kante an der Wickelwelle befestigt. Die andere Kante der Rollobahn ist mit einem Zugstab verbunden, der endseitig in zwei Führungsschienen geführt ist. Die Führungsschienen verlaufen beidseits der aufgespannten Rollobahn.

Um die Rollobahn aufgespannt zu halten sind zwei Schubglieder vorhanden, von denen das eine der einen Führungsschiene und das andere der anderen Führungsschiene zugeordnet ist. Die Schubglieder sind in den Führungsschienen geführt und tragen beide eine Verzahnung. Sie wirken schiebend mit dem Zugstab zusammen. Jedes Schubglied ist als nicht endloses Betätigungsglied ausgeführt in der Weise, dass es zwei nicht miteinander verbundene Enden aufweist.

Ferner umfasst das neue Fensterrollo zwei Antriebszahnräder von denen das eine dem einen Schubglied und das andere dem anderen Schubglied zugeordnet ist. Die Antriebszahnräder befinden sich bei den Stirnenden der Wickelwelle. Die Schubglieder wirken kinematisch zwischen den Antriebszahnrädern und dem Zugstab.

Mit Hilfe einer weiteren mechanischen Anordnung wird die Tuchspannung in der Rollobahn aufrecht erhalten.

Dazu kommen grundsätzlich zwei Lösungswege in Frage. Zum einen kann die weitere mechanische Anordnung durch Federmittel gebildet sein oder durch eine Art Getriebe.

Bei der einen Ausführungsform wirken die Federmittel zwischen der Wickelwelle und jedem der beiden Antriebszahnräder. Diese ist eine besonders platzsparende Lösung und konstruktiv auch relativ einfach. Dafür kann der Zugstab bei ungünstigem Anfassen an jedem einem Ende verkanten.

Bei der anderen Lösung ist eine weitere, parallel zur Wickelwelle verlaufende Verbindungswelle vorgesehen, auf der die Zahnräder sitzen. Auch sie können drehelastisch mit der Verbindungswelle gekuppelt sein, die ihrerseits wiederum über ein Getriebe mit der Wickelwelle verbunden ist.

Besser werden die Verhältnisse hinsichtlich der Verkantung, wenn die beiden Zahnräder drehfest mit der Verbindungswelle gekuppelt sind, weil dann zwangsläufig die Bewegungen an beiden Enden des Zugstabs über die Schubglieder, die starr miteinander gekoppelt sind, auf das andere Ende übertragen wird. Dies gilt für die Einfahrbewegung. Bei der Ausfahrbewegung sind die Verhältnisse deswegen weniger kritisch, weil die Zwangssynchronisation zwischen beiden Enden des Zugstabs über die Rollbahn hinreichend gewährleistet ist.

Wenn eine zusätzliche Welle verwendet wird, an der die Antriebszahnräder drehfest angebracht sind, kann auf Federmittel als zusätzliche mechanische Maßnahme verzichtet werden. Es genügt hier ein entsprechendes Getriebe, das die Drehbewegung der Wickelwelle auf die Verbindungswelle überträgt bzw. umgekehrt.

Günstige Verhältnisse ergeben sich dabei, wenn als Getriebe ein Seilgetriebe verwendet wird, mit dem es verhältnismäßig einfach ist, die Wirkung des sich ändernden Wickeldurchmessers des Ballens zu kompensieren, den die Rollobahn auf der Wickelwelle bildet. Da der Durchmesser der Zahnräder konstant bleibt, würde, ohne das kompensierende Seilgetriebe, die vorgeschobene Länge an Schubglied konstant bleiben, während mit abnehmendem Ballendurchmesser die abgewickelte Menge an Rollobahn abnimmt.

Das Seilgetriebe kann eine zylindrische Seilscheibe und eine Seilschnecke umfassen. Bei einer Seilschnecke handelt es sich um eine kegelstumpfförmige Seilscheibe mit darin enthaltenen Führungsnuten, die ein geordnetes Ablegen des Seils auf dem Umfang des Konus gewährleisten.

Als Schubglieder können bevorzugt Schubglieder mit rundem Querschnitt verwendet werden, beispielsweise Schubglieder, die aus einer zylindrischen Seele mit auf der Außenseite angebrachter Wendel bestehen.

Die Führungsschienen können bevorzugt Führungsnuten enthalten, die hinterschnitten sind. Die Führungsnuten setzen sich aus einer Nutenkammer und einem Nutenschlitz zusammen, dessen lichte Weite kleiner als der Durchmesser der Nutenkammer ist. Dadurch wird sichergestellt, dass die Schubglieder in der Nutenkammer ausknicksicher geführt werden.

Im Übrigen sind Weiterbildungen der Erfindung Gegenstand von Unteransprüchen.

Die nachfolgende Figurenbeschreibung beschränkt sich auf die Erläuterung der für das Verständnis der Erfindung wesentlichen Aspekte. Es ist klar, dass eine Reihe von Abwandlungen möglich sind. Kleinere, nicht beschriebene Details kann der Fachmann in der gewohnten Weise den Zeichnungen entnehmen die insoweit die Figurenbeschreibung ergänzen.

Die nachfolgenden Zeichnungen sind nicht unbedingt maßstäblich. Zur Veranschaulichung der wesentlichen Details kann es sein, dass bestimmte Bereiche übertrieben groß dargestellt sind.
- Fig. 1: zeigt in einer Draufsicht einen Pkw mit ei- nem Dachfenster;
- Fig. 2: zeigt das Antriebkonzept des Dachfensterrol- los des Pkw nach Fig. 1 in einer schemati- sierten Darstellung;
- Fig. 3: zeigt die Verbindung zwischen einem der An- triebszahnräder und der Wickelwelle in einer vereinfachten perspektivischen Darstellung;
- Fig. 4: veranschaulicht eine Anordnung, bei der die Antriebszahnräder der Schubglieder direkt verbunden sind und die Verbindungswelle über ein Seilgetriebe mit der Wickelwelle gekup- pelt ist; und
- Fig. 5: veranschaulicht eine Anordnung, ähnlich der nach Fig. 2, unter Verwendung eines Stirn- radgetriebes zum Kuppeln der Wickelwelle mit der Verbindungswelle.

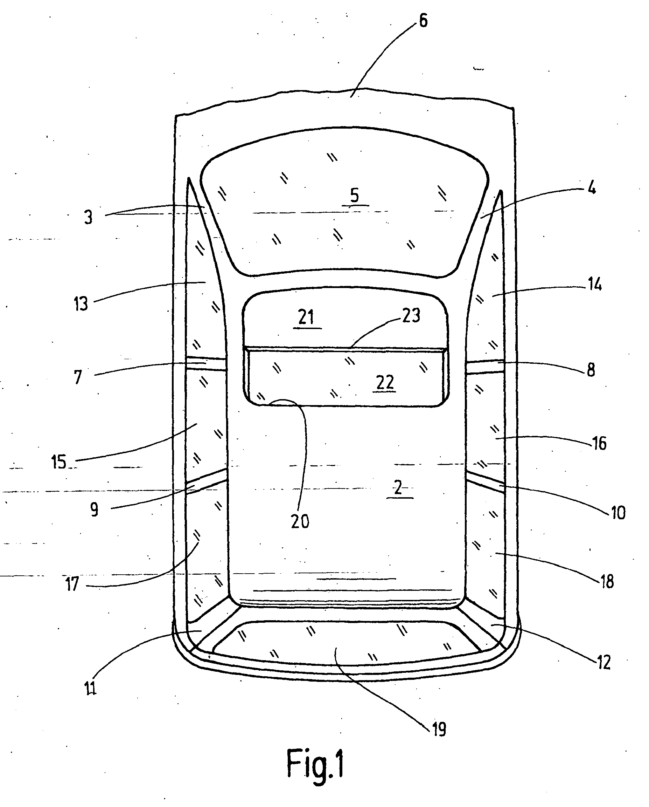

Fig. 1 zeigt in einer schematisierten Draufsicht einen Kombi-PKW 1. Zu erkennen ist sein Dach 2, von dem an der Vorderkante zwei A-Säulen 3 und 4 ausgehen. Zwischen den beiden A-Säulen 3 und 4 befindet sich eine Windschutzscheibe 5, die an der Unterkante in eine Kühlerhaube 6 übergeht. Nach hinten folgen auf die beiden A-Säulen 3 und 4 B-Säulen 7 und 8, C-Säulen 9 und 10 sowie D-Säulen 11 und 12. Zwischen den Säulen 3 .. 12 sind vordere Seitenscheiben 13, 14, hintere Seitenscheiben 15, 16 und Seitenscheiben des Kofferraums 17, 18 zu erkennen. Den Abschluss bildet eine Heckscheibe 19, die zwischen den beiden D-Säulen 11, 12 vorhanden ist.

Im vorderen Bereich des Daches 2 ist angrenzend an die Frontscheibe 5 eine Dachöffnung 20 enthalten, in der sich ein Dachfenster 21 befindet. Das Dachfenster 21 kann ein Glasschiebedach oder ein Glashubdach sein. Es kann sich um ein Glasdach handeln, das beide Funktionen miteinander verbindet.

Unterhalb des Glasdaches 21 ist eine teilweise ausgezogenen Rollobahn 22 zu erkennen. Die Rollobahn 22 ist an einem Auszugsprofil 23 befestigt. Die Rollobahn 22 und das Auszugsprofil 23 gehören zu einem manuell betätigten Dachfensterrollo 24.

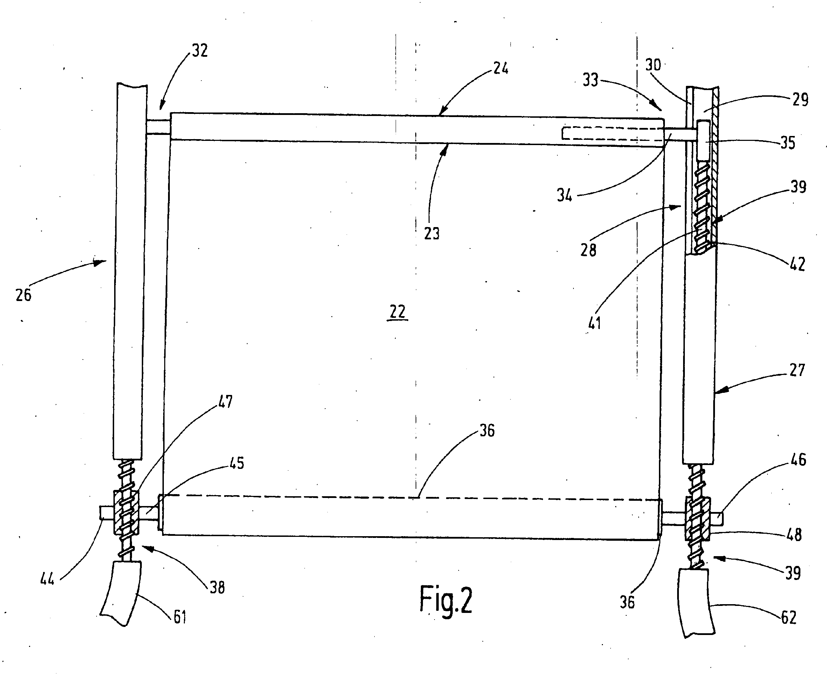

Fig. 2 zeigt den grundsätzlichen Aufbau des Dachfensterrollos 24.

Gemäß Fig. 2 gehören zu dem Dachfensterrollo 25 zwei seitlich des Dachfensters 25 verlaufende Führungsschienen 26 und 27.

Die Führungsschienen 26 und 27 sind spiegelbildlich zueinander angeordnet und folgen dem Verlauf der Seitenkante des Dachfensters 25.

Da die beiden Führungsschienen 26 und 27 untereinander gleich sind, genügt die Erläuterung der inneren Struktur der Führungsschiene 27. Die Erläuterung gilt sinngemäß für die Führungsschiene 26.

In der Führungsschiene 27 befindet sich eine hinterschnittene Führungsnut 28, deren Profil sich aus einer Nutenkammer 29 und einem Nutenschlitz 30 zusammensetzt. Die Weite des Schlitzes 30 ist kleiner als die lichte Weite der Nutenkammer 29, wodurch sich die hinterschnittene Struktur ergibt.

Die beiden Führungsschienen 26 und 27 dienen dazu, den Zugstab 23 zu führen, an dem mit einer Kante die Rollobahn 22 befestigt ist. Der Zugstab 23 setzt sich aus einem Mittelstück zusammen, in dem zwei Endstücke 32 und 33 teleskopartig geführt sind. Das Mittelstück sitzt beispielsweise in einer an der Rollobahn 22 ausgebildeten schlauchförmigen Schlaufe.

Jedes der beiden Endstücke 32 und 33 weist eine Teleskopstange 34 auf, an deren freien Ende ein Gleitstück 35 sitzt. Die Teleskopstange 34 ist im Querschnitt so bemessen, dass sie durch den Schlitz 29 mit Spiel hindurchführt. Der Querschnitt des Gleitstücks 35 hingegen ist an den Querschnitt der Nutenkammer 29 angepasst, die beispielsweise Kreisquerschnitt hat.

Das von dem Zugstab 23 abliegende Ende der Rollobahn 22 ist an einer Wickelwelle 36 befestigt.

Eine Antriebseinrichtung dient dazu, die Rollobahn 22 zwischen der ausgezogenen Stellung, in der sie vor dem Dachfenster 21 ausgebreitet ist, in eine zurückgezogene Stellung zu überführen.

Zu der Antriebseinrichtung gehören zwei linienförmige biegeelastische Schubglieder 38 und 39, die ebenfalls gleich ausgebildet sind. Jedes der Schubglieder 38, 39 setzt sich aus einer im Querschnitt kreisförmigen Seele 41 und einer auf der Außenseite der kreisförmigen Seele 41 befestigten Wendel 42 zusammen. Es entsteht hierdurch eine Art rundumverzahnte biegeelastische Zahnstange. Der Außendurchmesser der Schubglieder 38, 39 entspricht der lichten Weite der Nutenkammer 29. In der Nutenkammer 29 sind die beiden Schubglieder 38, 39 in ihren zugehörigen Führungsschienen 25 und 27 ausknicksicher geführt und können Druckkräfte übertragen. Ihr Durchmesser ist größer als es der Schlitzweite entspricht, so dass sie auch bei Druckbelastung nicht seitlich durch den Schlitz 30 ausknicken können.

Aus der Wickelwelle 36 stehen endseitig zwei Achszapfen 45, 46 vor, die mit der Wickelwelle 36 drehfest verbunden sind. Sie dienen unter anderem der Lagerung der Wickelwelle im Dach des Fahrzeugs. Auf den Achszapfen 45 und 46 sitzt jeweils ein Stirnzahnrad 47 bzw. 48, das auf der Außenumfangsfläche mit einer Verzahnung versehen ist, die einen formschlüssigen Eingriff mit dem betreffenden zugehörigen Schubglied 38, 39 gestattet. Durch nicht weiter veranschaulichten Mittel werden die beiden Schubglieder 38, 39 in radialer Richtung gegen das zugehörige Antriebszahnrad 47, 48 angedrückt, damit stets der Eingriff bestehen bleibt. Die Schubglieder 38, 39 liegen auf derselben Seite bezogen auf die Drehachse auf dem zugehörigen Antriebszahnrad 47, 48 auf, auf der auch die Rollobahn 22 von der Wickelwelle 36 abläuft.

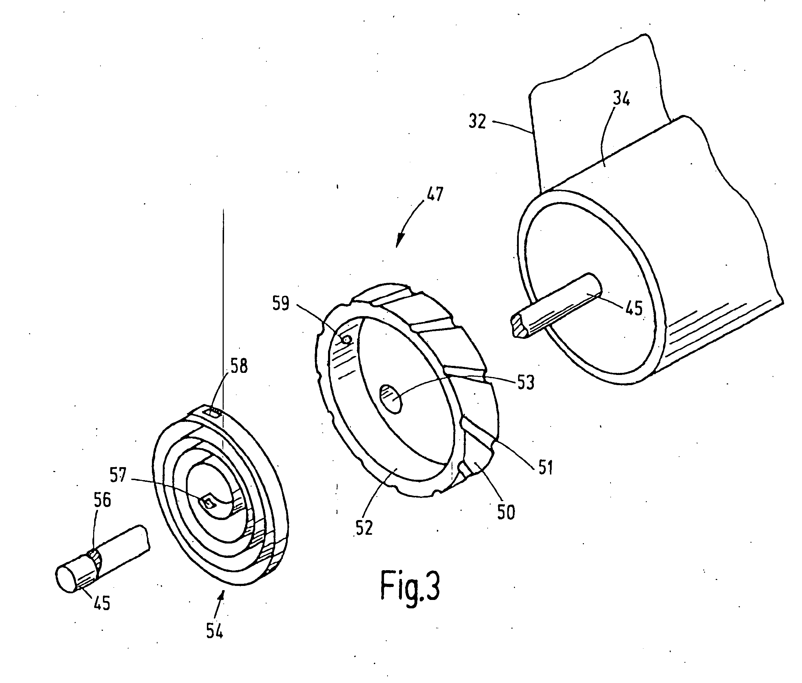

Das Zahnrad 47 ist auf dem Achszapfen 45 drehbar gelagert. Sinngemäß das Gleiche gilt für das Zahnrad 48 auf dem Achszapfen 46. Die kinematische Verbindung, über die ein Antriebsmoment übertragen wird, ist in Fig. 3 im Einzelnen veranschaulicht. Die dort gegebene Beschreibung gilt sinngemäß für beide Antriebszahnräder 47 und 48.

Das Antriebszahnrad 47 hat eine scheibenförmige Gestalt mit einer zylindrischen Außenumfangsfläche 50, in der als Verzahnung schräg verlaufende Nuten 51 ausgebildet sind, die den betreffenden Abschnitt der Wendel 42 aufnehmen. Koaxial zu der Außenumfangsfläche 50 enthält das Zahnrad 47 eine Ausdrehung 52, in der konzentrisch eine Lagerbohrung 53 enthalten ist, mit der das Zahnrad 47 auf dem Achszapfen 45/46 drehbar gelagert ist. Die Ausdrehungen 52 bildet ein Federgehäuse für eine Spiralfeder 54, die eine drehelastische Verbindung zwischen dem Achszapfen 45/46 und dem Zahnrad 47/48 herstellt. Hierzu ist der Achszapfen 45/46 an der entsprechenden Stelle mit einer aufgestülpten Nase 56 versehen, die als Wiederlager für eine an dem inneren Federende vorgesehene Öffnung 57 dient. Das außenliegende Federende enthält ebenfalls eine Öffnung 58, die formschlüssig mit einer Nase 59 verbindbar ist, die von der Außenumfangsfläche der Ausdrehung 52 radial nach innen zeigt.

Wie sich aus der späteren Funktionsbeschreibung ergibt, vollführt bei entsprechender Dimensionierung des effektiven Durchmessers des Zahnrads 47/48, bezogen auf den Ballen, den die aufgewickelte Rollobahn 22 auf der Wickelwelle 36 bildet, eine Relativdrehung gegenüber der Wickelwelle 36. Das Maß dieser Relativdrehung beträgt ca. maximal eine Umdrehung. Dadurch kann eine Spiralfeder 54 verwendet werden, die einen verhältnismäßig kurzen Wirkweg hat.

Die Darstellung in den Figuren ist nicht maßstäblich. Vielmehr geht es hier darum, das Wesentliche des erfindungsgemäßen Antriebskonzepts zu erläutern. Die einschlägigen Werte für die Bemessung der Führungsschienen 26 und 27 sowie der daraus resultierenden Außendurchmesser der beiden elastische biegsamen Schubglieder 38, 39 sind aus der Praxis bekannt.

Der Vollständigkeit halber sei noch erwähnt, dass aus der Sicht der jeweiligen Führungsschiene 26, 27 auf der gegenüberliegenden Seite des betreffenden Zahnrads 47, 48 sich ein biegeelastisches Speicherrohr 61 bzw. 62 befindet, das entsprechend der räumlichen Verhältnisse weitgehend frei im Fahrzeug verlegt wird.

Die Maßnahmen, die getroffen sind, um die Speicherrohre 61 und 62 ortsfest zu halten, sind, da sie für das Verständnis der Erfindung nicht von Bedeutung sind, nicht dargestellt. Ebenso fehlt beispielsweise ein eventuell vorhandenes Gehäuse, das das Zahnrad 47 bzw. 48 umgibt und das zum Durchtritt des zugehörigen biegeelastischen Schubglieds 38, 39 eine entsprechende Tangentialbohrung enthält.

Die Wirkungsweise der gezeigten Anordnung ist wie folgt:

Es wird hierbei davon ausgegangen, dass zunächst die Rollobahn 22 vollständig, d.h. so weit wie möglich, auf der Wickelwelle 36 aufgewickelt ist. In dem aufgewickelten Zustand sind die in den beiden Zahnrädern 47, 48 enthaltenen Spiralfedern 54 geringfügig vorgespannt. Aufgrund der Vorspannung werden die damit in Eingriff stehenden und somit formschlüssig gekuppelten Schubglieder 38 und 39 elastisch in Richtung auf die beiden Gleitstücke 321 des Zugstabs 23 vorgespannt und liegen dort an. Die Vorspannkraft der Spiralfedern 54 hält die Rollobahn 22 zwischen der Wickelwelle 36 und dem Zugstab 23 gestrafft.

Wenn der Benutzer, ausgehend von der vollständig eingefahrenen Stellung, in der der Zugstab 23 neben der betreffenden Seitenkante 20 des Dachfenster 21 steht, das Dachfensterrollo 24 ausfahren will, erfasst er mit der Hand den Zugstab 23. Er zieht den Zugstab 23 in Richtung auf die Vorderkante des Daches bis zu jener Stelle, wo er die Grenze der Abschattung haben möchte. Durch das Wegziehen des Zugstabs 23 wird die Wickelwelle 36 in Umdrehungen versetzt, und zwar im Sinne des Abziehens der Rollobahn 22. Gleichzeitig damit laufen auch die über die Spiralfedern 54 gekuppelten Antriebszahnräder 47 und 48 gleichsinning in derselben Richtung. Sie schieben dementsprechend die Vorschubglieder 38, 39 in die Führungsschienen 26, 27 vor.

Da der Ballendurchmesser auf der Wickelwelle 36 kontinuierlich sinkt, wird die pro Umdrehung abgezogene Menge an Rollobahn 22 kleiner sein, als die Länge an Vorschubglied 38, 39, das pro Umdrehung des angekuppelten Antriebszahnrades 47, 48 geliefert wird. Die Spiralfedern 54 haben zusätzlich die Aufgabe, diese Wegdifferenz zu kompensieren. Aus der Beschreibung ergibt sich ohne weiteres, das mit zunehmendem Ausfahrhub der Rollobahn 22 diese Spiralfedern 54 weiter aufgezogen werden.

Zum Einfahren drückt der Benutzer von Hand den Zugstab 23 zurück in Richtung auf die Wickelwelle 36. Dabei stoßen die Gleitstücke 35 die Schubglieder 38, 39 zurück in Richtung der Speicherrohre 61 bzw. 62. Hierdurch werden die Schubglieder 38, 39 durch die von Hand aufgebrachte Kraft zurückbewegt und setzten die mit ihnen formschlüssig gekuppelten Antriebszahnräder 47, 48 in der entsprechenden Richtung in Bewegung. Diese Bewegung wird über die Spiralfedern 54 und die Achszapfen 45 und 46 auf die Wickelwelle 36 übertragen, die daraufhin entsprechend die Rollobahn 22 wieder aufwickelt.

Wie sich aus der Erläuterung ergibt, besteht die vom Benutzer aufzubringende Kraft darin, die Reibung der Vorschubglieder 38, 39 in den Führungsschienen 26, 27 bzw. den Speicherrohren 61, 62 zu überwinden. Hinzu kommt die Kraft, die notwendig ist, um die Spiralfedern 54 entsprechend der Wickeldifferenz zwischen Wickelwelle 36 und Antriebszahnrad 47/48 aufzuziehen. Diese Aufzugskraft ist deutlich kleiner als die Reibkraft der Schubglieder 38, 39 in ihren Führungsschienen bzw. Speicherrohren. Es ist sichergestellt, dass der Zugstab 23 an jeder beliebigen Stelle gestoppt werden kann.

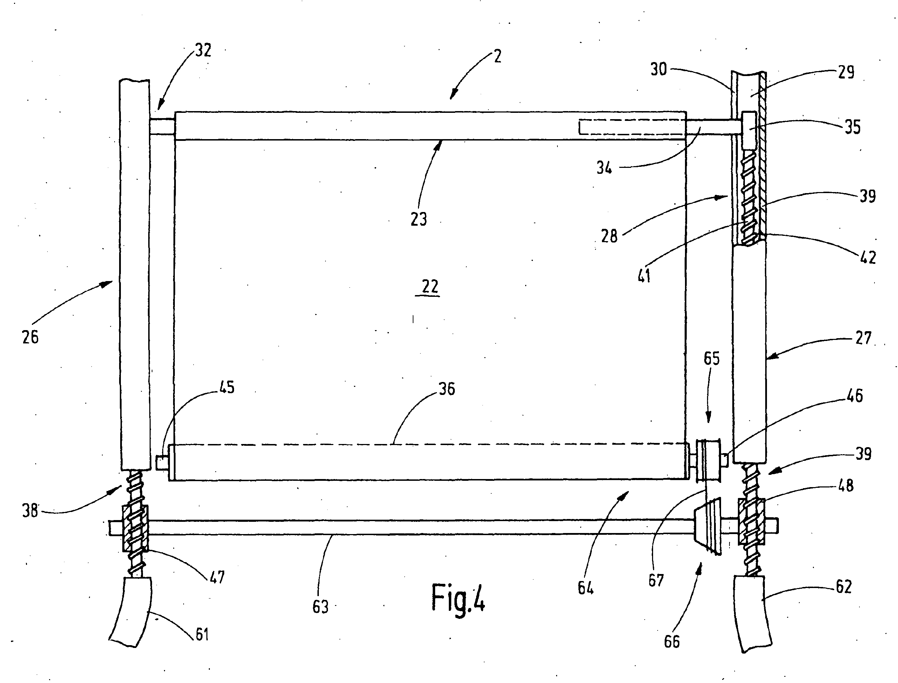

Fig. 4 zeigt eine Anordnung, die ohne zusätzliche Federmittel auskommt. Hierzu sitzen die beiden Antriebszahnräder 47 und 48 auf einer achsparallel neben der Wickelwelle 36 angeordneten Verbindungswelle 63. Die beiden Antriebszahnräder 47 und 48 sind mit der Verbindungswelle 63 drehfest gekuppelt. Im Übrigen ist der Aufbau und die Verbindung zwischen den Antriebszahnrädern 47 und 48 einerseits und den Schubgliedern 38, 39, wie zuvor beschrieben.

Um die Drehbewegung der Antriebszahnräder 47 und 48 beim Einfahren auf die Wickelwelle 36 zu übertragen, ist ein Seilgetriebe 64 vorgesehen. Zu dem Seilgetriebe 64 gehört eine zylindrische Seilscheibe 65, die drehfest auf dem Achszapfen 46 der Wickelwelle 36 angeordnet ist. Die Verbindungswelle 63 trägt drehfest eine zu dem Seilgetriebe 64 gehörende Seilschnecke 66. Bei einer Seilschnecke 66 handelt es sich um eine Seilscheibe mit kegliger oder konischer Außenumfangsfläche, die gegebenfalls Seilnuten enthält um ein geordnetes Ablegen eines Seils 67 zu erzwingen, das sich zwischen der Seilscheibe 35 und der Seilschnecke 66 erstreckt.

Das Seil 67 ist mit einem Ende an der zylindrischen Seilscheibe 65 verankert und mit dem anderen Ende an der Seilschnecke 66. Das die Seilscheibe 65 und die Seilschnecke 66 verbindende Trum des Seils 67 liegt auf derselben Seite der Wickelwelle 36 wie der Abgang der Rollobahn 22 von der Wickelwelle 36.

Die genaue Dimensionierung des Seilgetriebes 64 ergibt sich aus der nachfolgenden Funktionsbeschreibung.

Es sei angenommen, dass sich der Zugstab 23, entsprechend dem geöffneten Rollo 24, neben der Hinterkante des Dachfensters 21 befindet. In diesem Zustand liegt der Abgang des verbindenden Seiltrums in der Nähe jenes Stirnendes der Seilschnecke 66, das den kleineren Durchmesser aufweist. Das Seil 67 ist gespannt, womit auch in der Rollobahn 22 die erforderliche Tuchspannung herrscht, die ein Schlaffhängen verhindert und dafür sorgt, dass die Gleitstücke 35 an den Schubgliedern 38, 39 anliegen.

Wenn der Benutzer nun mit der Hand die Vorderkante der Rollobahn 22 mit dem Zugstab 23 erfasst und in Richtung nach vorne bewegt, wird, wie zuvor, die Rollobahn 22 entsprechend von der Wickelwelle 36 abgezogen, die dadurch in Umdrehungen versetzt wird. Die Drehbewegung der Wickelwelle 36 führt dazu, dass das Seil 67 auf der zylindrischen Seilscheibe 65 aufgewickelt und dabei von der Seilschnecke 66 abgewickelt wird. Hierbei reduziert sich der Durchmesser des Ballens, was dazu führt, dass pro Längeneinheit Wegstrecke der Drehwinkel der Wickelwelle 36 zunimmt, je mehr sich der Zugstab 23 dem Vollauszug nähert. Dementsprechend muss sich das Übersetzungsverhältnis zwischen der Seilscheibe 65 und der Seilscheibe 66 ändern, damit entsprechend mehr Länge an Schubglied 38, 39 vorgeschoben wird, wenn der Zugstab der Position des Vollauszugs angenähert wird. Um dies zu erreichen, läuft der Ablösepunkt des Seils 67 auf der Seilschnecke 66 von jenem Ende mit dem kleineren Durchmesser in Richtung auf jenes Ende mit dem größeren Durchmesser. Hierdurch wird erreicht, dass das Zahnrad 48 gegenüber der Wickelwelle 36 zunehmend retardiert wird. Dadurch läuft schlussendlich das an dem Zugstab 23 anliegende Ende der beiden Schubglieder 39 mit derselben Geschwindigkeit, wie der Zugstab 23. Die formschlüssige Berührung zwischen den stumpfen Enden der Schubglieder 38, 39 und den Gleitstücken 35 bleibt erhalten. Eventuelle Restfehler werden durch die Elastizität der Tuchbahn 22 kompensiert. Die Restfehler sind jedoch sehr klein.

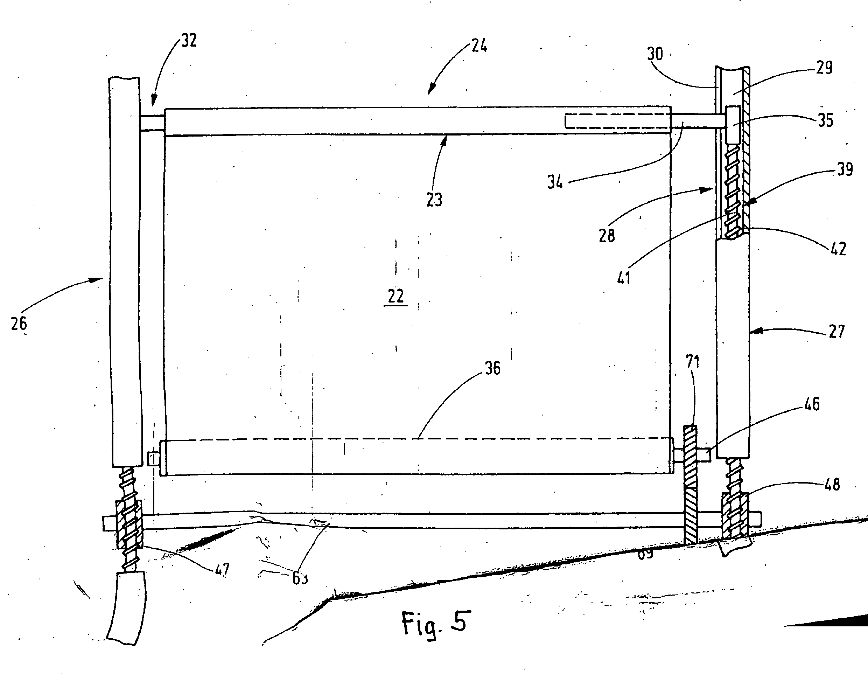

Fig. 5 zeigt eine Ausführungsform, die der Ausführungsform nach Fig. 4 ähnlich ist. Die beiden Zahnräder 47 und 48 sitzen wiederum drehfest auf der Verbindungswelle 63. Die getriebliche Kupplung zwischen der Vebindungswelle 63 und der Wickelwelle 36 geschieht mit Hilfe von zwei Stirnzahnrädern 69 und 71. Das Stirnzahnrad 71 sitzt beispielsweise drehfest auf dem Achszapfen 46, während das Zahnrad 69 über eine Spiralfeder mit der Verbindungswelle 63 gekuppelt ist. Die Spiralfeder und das Zahnrad 69 können einen Aufbau aufweisen, wie dies in Verbindung mit Fig. 3 erläutert ist. Der erforderliche Drehzahl-/Wegunterschied wird hier, wie bei dem Ausführungsbeispiel nach Fig. 2, durch die Spiralfeder 54 ermöglicht. Allerdings drehen sich beide Zahnräder 47 und 48 bei dem Ausführungsbeispiel nach Fig. 5 zwangsläufig synchron, so dass die Gefahr des Schiefziehens und Verkantens des Zugstabs 23 vermieden ist, selbst dann, wenn der Benutzer unsymmetrisch die Vorderkante der Rollobahn 22 anfasst, um das Rollo 24 zu betätigen.

Ein Dachfensterrollo weist neben der aufgespannten Rollobahn zwei Führungsschienen auf. In jeder Führungsschiene läuft ein Schubglied das formschlüssig über ein eigenes Antriebszahnrad angetrieben ist. Bei der manuellen Betätigung der Rollobahn wird die Drehbewegung der Wickelwelle über eine Getriebeanordnung auf die Antriebszahnräder, und damit die Schubglieder, übertragen. Beim Einfahren dagegen wirkt die Kraft von den Schubgliedern über die Antriebszahnräder auf die Wickelwelle, um die notwendige Rotationsbewegung der Wickelwelle zu erzeugen.

## Patentansprüche

1. Manuell betätigtes Fensterrollo (24) für Kraftfahrzeuge, insbesondere Dachfensterrollo,
mit einer drehbar gelagerten Wickelwelle (36), die zwei Stirnenden aufweist,
mit einer Rollobahn (22), die mit einer Kante an der Wickelwelle (36) befestigt ist,
mit einem Zugstab (23), der an einer von der Wickelwelle (36) abliegenden Kante mit der Rollobahn (22) verbunden ist.
mit zwei Führungsschienen (26,27), die beidseits der aufgespannten Rollobahn (22) verlaufen und formschlüssig den Zugstab (23) führen,
mit zwei Schubgliedern (38,39),
- von denen das eine der einen Führungsschiene (26,27) und das andere der anderen Führungsschiene (26,27) zugeordnet ist,
- die durch die Führungsschienen (26,27) geführt sind,
- die beide eine Verzahnung (42) tragen,
- die mit dem Zugstab (23) zusammenwirken und
- von denen jedes zwei nicht miteinander verbundene Enden aufweist,
mit zwei Antriebszahnräder (48,49),
- von denen das eine dem einen Schubglieder (38,39) und das andere dem anderen Schubglied (38,39) zugeordnet ist,
- die bei den Stirnenden der Wickelwelle (36) angeordnet sind,
mit einer weiteren mechanischen Anordnung (54,67,69,71), die dazu eingerichtet ist eine Tuchspannung in der Rollobahn (22) aufrecht zu erhalten,
wobei die Schubglieder (38,39) kinematisch zwischen den Antriebsrädern (48,49) und dem Zugstab (23) liegen,
**dadurch gekennzeichnet, dass** das Fensterrolle zwei biegeelastische Speicherrohre aus einem flexiblen Material (61, 62), aufweist, die sich aus der Sicht der jeweiligen Führungsschiene (26,27) auf der gegenüberliegenden Seite des betreffenden Antriebszahnrads (47, 48) befinden, und dass die Schubglieder an den Antriebszahnrädern tangential vorbeilaufen.

2. Vorrichtung nach Anspruch 1, **dadurch gekennzeichnet, dass** die weitere mechanischen Einrichtung Federmitteln (54) aufweist.

3. Vorrichtung nach Anspruch 2, **dadurch gekennzeichnet, dass** die Federmittel (54) kinematisch zwischen der Wickelwelle (36) und jedem der beiden Antriebszahnräder (48,49) angeordnet sind.

4. Vorrichtung nach Anspruch 2, **dadurch gekennzeichnet, dass** jedes Antriebszahnrad (48,49) über ein eigenes Federmittel (54) mit der Wickelwelle (36) gekuppelt ist.

5. Vorrichtung nach Anspruch 2, **dadurch gekennzeichnet, dass** das Federmittel (54) die Form einer Spiralfeder hat.

6. Vorrichtung nach Anspruch 1, **dadurch gekennzeichnet, dass** die beiden Antriebszahnräder (48,49) auf einer Verbindungswelle (63) sitzen.

7. Vorrichtung nach Anspruch 1, **dadurch gekennzeichnet, dass** die weitere mechanischen Einrichtung Getriebemittel (64,69,71) aufweist, die die Verbindungswelle (63) mit der Wickelwelle (36) kinematisch verbinden.

8. Vorrichtung nach Anspruch 1, **dadurch gekennzeichnet, dass** die weitere mechanischen Einrichtung Getriebemittel (69,71) aufweist, die die Verbindungswelle (63) mit der Wickelwelle (36) kinematisch verbinden, und zusätzlich Federmittel aufweisen.

9. Vorrichtung nach Anspruch 6 und 7, **dadurch gekennzeichnet, dass** jedes Antriebszahnrad (48,49) über ein Federmittel mit der Verbindungswelle gekuppelt ist.

10. Vorrichtung nach Anspruch 7 oder 8, **dadurch gekennzeichnet, dass** die Antriebszahnräder (48,49) drehfest auf der Verbindungswelle (63) sitzen.

11. Vorrichtung nach Anspruch 6 und 7, **dadurch gekennzeichnet, dass** die Getriebemittel zwei miteinander in Eingriff stehende Zahnräder (69,71) umfassen, von denen eines mit der Wickelwelle (36) und das andere mit der Verbindungswelle (63) gekuppelt ist.

12. Vorrichtung nach Anspruch 11, **dadurch gekennzeichnet, dass** eines der Zahnräder (69,71) über Federmittel () mit seiner Welle gekuppelt ist.

13. Vorrichtung nach Anspruch 11, **dadurch gekennzeichnet, dass** die Getriebemittel von einem Seilgetriebe (67) gebildet sind.

14. Vorrichtung nach Anspruch 13, **dadurch gekennzeichnet, dass** das Seilgetriebe (67) eine zylindrische Seilscheibe (65) und eine Seilschnecke (66) umfasst.

15. Fensterrollo nach Anspruch 1, **dadurch gekennzeichnet, dass** der Zugstab (23) längenveränderlich ist.

16. Fensterrollo nach Anspruch 1, **dadurch gekennzeichnet, dass** die Führungsschienen (26,27) einends in der Nähe der Wickelwelle (36) beginnen,

17. Fensterrollo nach Anspruch 1, **dadurch gekennzeichnet, dass** die Führungsschienen (26,27) parallel oder konvergierend zueinander verlaufen.

18. Fensterrollo nach Anspruch 1, **dadurch gekennzeichnet, dass** jede Führungsschiene (26,27) eine Führungsnut (27) enthält.

19. Fensterrollo nach Anspruch 18, **dadurch gekennzeichnet, dass** sich der Querschnitt der Führungsnut (28) aus einer Nutenkammer (29) und einem Nutenschlitz (30) zusammensetzt, wobei der Durchmesser der Nutenkammer (29) größer ist als die lichte Weite des Schlitzes (30) derart, dass eine hinterschnittene Führungsnut (28) entsteht.

20. Fensterrollo nach Anspruch 19, **dadurch gekennzeichnet, dass** in der Nutenkammer (29) das Schubglied (38,39) ausknicksicher geführt ist.

21. Fensterrollo nach Anspruch 1, **dadurch gekennzeichnet, dass** das Schubglied (38,39) eine Rundumverzahnung (42) aufweist.

22. Fensterrollo nach Anspruch 1, **dadurch gekennzeichnet, dass** das Antriebszahnrad (48,49) ein Stirnzahnrad ist.

23. Fensterrollo nach Anspruch 1, **dadurch gekennzeichnet, dass** Mittel vorgesehen sind, die dazu eingerichtet sind, das jeweilige Schubglied (38,39) mit seinem zugehörigen Antriebszahnrad (48,49) in Eingriff zu halten.

24. Fensterrollo nach Anspruch 1, **dadurch gekennzeichnet, dass** für jedes Antriebszahnrad (48,49) ein eigenes Getriebegehäuse vorgesehen ist.

25. Fensterrollo nach Anspruch 1, **dadurch gekennzeichnet, dass** für jedes Schubglied (38,39) ein eigenes Speicherrohr (61,62) vorhanden ist, das bei eingefahrenem Fensterrollo das Leertrum des Schubglieds (38,39) aufnimmt.

## Claims

1. Manually operated window roller blind (24) for motor vehicles, in particular a roof roller blind,
with a rotatably mounted winding shaft (36) having two face ends,
with a blind sheet (22), which is fastened at one edge to the winding shaft (36),
with a pull rod (23), which is connected to the blind sheet (22) at an edge remote from the winding shaft (36),
with two guide rails (26, 27), which run on both sides of the opened blind sheet (22) and guide the pull rod (23) in a positive-locking manner,
with two pushing members (38, 39),
• of which one is associated with one guide rail (26, 27) and the other is associated with the other guide rail (26, 27),
• which are guided by the guide rails (26, 27),
• which both bear a tooth system (42),
• which cooperate with the pull rod (23) and
• each of which has two non-interconnected ends,
with two drive gear wheels (48, 49),
• of which one is associated with one pushing member (38, 39) and the other is associated with the other pushing member (38, 39),
• which are arranged at the face ends of the winding shaft (36),
with a further mechanical arrangement (54, 67, 69, 71), which is fitted to maintain a cloth tension in the blind sheet (22),
wherein the pushing members (38, 39) lie kinematically between the drive wheels (48, 49) and the pull rod (23),
**characterised in that** the window roller blind has two pliant storage tubes (61, 62) made of a flexible material and located on the opposite side of the respective drive gear wheel (47, 48), viewed from the respective guide rail (26, 27), and that the pushing members run past the drive gear wheels tangentially.

2. Device according to claim 1, **characterised in that** the further mechanical arrangement has spring elements (54).

3. Device according to claim 2, **characterised in that** the spring elements (54) are arranged kinematically between the winding shaft (36) and each of the two drive gear wheels (48, 49).

4. Device according to claim 2, **characterised in that** each drive gear wheel (48, 49) is coupled to the winding shaft (36) by means of its own spring element (54).

5. Device according to claim 2, **characterised in that** the spring element (54) has the form of a spiral spring.

6. Device according to claim 1, **characterised in that** the two drive gear wheels (48, 49) sit on a connection shaft (63).

7. Device according to claim 1, **characterised in that** the further mechanical arrangement has gear elements (64, 69, 71), which kinematically connect the connection shaft (63) to the winding shaft (36).

8. Device according to claim 1, **characterised in that** the further mechanical arrangement has gear elements (69, 71), which kinematically connect the connection shaft (63) to the winding shaft (36) and additionally have spring elements.

9. Device according to claim 6 and 7, **characterised in that** each drive gear wheel (48, 49) is coupled to the connection shaft by means of a spring element.

10. Device according to claim 7 or 8, **characterised in that** the drive gear wheels (48, 49) sit on the connection shaft (63) in a manner fixed against rotation.

11. Device according to claim 6 and 7, **characterised in that** the gear elements comprise two intermeshing gear wheels (69, 71), of which one is coupled to the winding shaft (36) and the other is coupled to the connection shaft (63).

12. Device according to claim 11, **characterised in that** one of the gear wheels (69, 71) is coupled to its shaft by means of spring elements ().

13. Device according to claim 11, **characterised in that** the gear elements are formed by a rope gear (67).

14. Device according to claim 13, **characterised in that** the rope gear (67) comprises a cylindrical rope pulley (65) and a rope worm (66).

15. Window roller blind according to claim 1, **characterised in that** the pull rod (23) is adjustable in length.

16. Window roller blind according to claim 1, **characterised in that** the guide rails (26, 27) begin at one end in the vicinity of the winding shaft (36).

17. Window roller blind according to claim 1, **characterised in that** the guide rails (26, 27) run parallel to one another or converge towards one another.

18. Window roller blind according to claim 1, **characterised in that** each guide rail (26, 27) contains a guide groove (27).

19. Window roller blind according to claim 18, **characterised in that** the cross-section of the guide groove (28) is formed from a groove chamber (29) and a groove slot (30), wherein the diameter of the groove chamber (29) is larger than the width of the slot (30) such that an undercut guide groove (28) is formed.

20. Window roller blind according to claim 19, **characterised in that** the pushing member (38, 39) is guided in the groove chamber (29) to be secure against buckling.

21. Window roller blind according to claim 1, **characterised in that** the pushing member (38, 39) has a full tooth system (42).

22. Window roller blind according to claim 1, **characterised in that** the drive gear wheel (48, 49) is a spur gear wheel.

23. Window roller blind according to claim 1, **characterised in that** elements are provided, which are fitted to hold the respective pushing member (38, 39) in engagement with its associated drive gear wheel (48, 49).

24. Window roller blind according to claim 1, **characterised in that** each drive gear wheel (48, 49) has its own gearbox.

25. Window roller blind according to claim 1, **characterised in that** each pushing member (38, 39) has its own storage tube (61, 62), which receives the slack of the pushing member (38, 39) when the window roller blind is retracted.

## Revendications

1. Store à enrouleur pour vitre (24) à actionnement manuel, destiné à des véhicules automobiles, en particulier store pour vitre de toit,
comprenant un axe d'enroulement (36) qui est monté tournant et présente deux extrémités frontales,
comprenant une bande de store (22) qui est fixée par un bord à l'axe d'enroulement (36),
comprenant une barre de traction (23) qui est reliée à la bande de store (22), sur un bord éloigné de l'axe d'enroulement (36),
comprenant deux rails de guidage (26, 27) qui s'étendent de part et d'autre de la bande de store (22) déroulée et guident la barre de traction (23) avec complémentarité de formes,
comprenant deux éléments de poussée (38, 39),
- dont l'un est associé à un rail de guidage (26, 27) et l'autre est associé à l'autre rail de guidage (26, 27),
- qui sont guidés par les rails de guidage (26, 27),
- qui portent tous deux une denture (42),
- qui coopèrent avec la barre de traction (23), et
- qui présentent chacun deux extrémités non reliées entre elles,
comprenant deux roues dentées d'entraînement (47, 48),
- dont l'une est associée à un élément de poussée (38, 39) et l'autre est associée à l'autre élément de poussée (38, 39),
- qui sont disposées près des extrémités frontales de l'axe d'enroulement (36),
comprenant un dispositif mécanique (54, 67, 69, 71) supplémentaire qui est conçu pour maintenir une tension de toile dans la bande de store (22),
les éléments de poussée (38, 39) étant situés, du point de vue cinématique, entre les roues d'entraînement (47, 48) et la barre de traction (23),
**caractérisé par le fait que** le store pour vitre présente deux tubes de rangement (61, 62) élastiques en flexion, réalisés dans un matériau souple, qui, vus du rail de guidage (26, 27) respectif, se trouvent sur le côté opposé de la roue dentée d'entraînement (47, 48) concernée, et **par le fait que** les éléments de poussée passent de manière tangentielle devant les roues dentées d'entraînement.

2. Dispositif selon la revendication 1, **caractérisé par le fait que** le dispositif mécanique supplémentaire présente des moyens à ressort (54).

3. Dispositif selon la revendication 2, **caractérisé par le fait que** les moyens à ressort (54) sont disposés du point de vue cinématique entre l'axe d'enroulement (36) et chacune des deux roues dentées d'entraînement (47, 48).

4. Dispositif selon la revendication 2, **caractérisé par le fait que** chaque roue dentée d'entraînement (47, 48) est accouplée à l'axe d'enroulement (36) par l'intermédiaire de son propre moyen à ressort (54).

5. Dispositif selon la revendication 2, **caractérisé par le fait que** le moyen à ressort (54) se présente sous la forme d'un ressort spiral.

6. Dispositif selon la revendication 1, **caractérisé par le fait que** les deux roues dentées d'entraînement (47, 48) sont montées sur un arbre de liaison (63).

7. Dispositif selon la revendication 1, **caractérisé par le fait que** le dispositif mécanique supplémentaire présente des moyens de transmission (64, 69, 71) qui relient l'arbre de liaison (63) sur le plan cinématique à l'axe d'enroulement (36).

8. Dispositif selon la revendication 1, **caractérisé par le fait que** le dispositif mécanique supplémentaire présente des moyens de transmission (69, 71) qui relient l'arbre de liaison (63) sur le plan cinématique à l'axe d'enroulement (36) et présentent en plus des moyens à ressort.

9. Dispositif selon les revendications 6 et 7, **caractérisé par le fait que** chaque roue dentée d'entraînement (47, 48) est accouplée à l'arbre de liaison par l'intermédiaire d'un moyen à ressort.

10. Dispositif selon la revendication 7 ou 8, **caractérisé par le fait que** les roues dentées d'entraînement (47, 48) sont montées solidaires en rotation sur l'arbre de liaison (63).

11. Dispositif selon les revendications 6 et 7, **caractérisé par le fait que** les moyens de transmission comprennent deux roues dentées (69, 71) qui engrènent l'une avec l'autre et dont l'une est accouplée à l'axe d'enroulement (36) et l'autre à l'arbre de liaison (63).

12. Dispositif selon la revendication 11, **caractérisé par le fait que** l'une des roues dentées (69, 71) est accouplée à son arbre par des moyens à ressort ().

13. Dispositif selon la revendication 11, **caractérisé par le fait que** les moyens de transmission sont constitués par une transmission à câble (67).

14. Dispositif selon la revendication 13, **caractérisé par le fait que** la transmission à câble (67) comprend une poulie de câble (65) cylindrique et une vis de câble (66).

15. Store à enrouleur pour vitre selon la revendication 1, **caractérisé par le fait que** la barre de traction (23) est réglable en longueur.

16. Store à enrouleur pour vitre selon la revendication 1, **caractérisé par le fait que** les rails de guidage (26, 27) commencent avec une extrémité à proximité de l'axe d'enroulement (36).

17. Store à enrouleur pour vitre selon la revendication 1, **caractérisé par le fait que** les rails de guidage (26, 27) sont parallèles ou convergent l'un vers l'autre.

18. Store à enrouleur pour vitre selon la revendication 1, **caractérisé par le fait que** chaque rail de guidage (26, 27) comporte une rainure de guidage (28).

19. Store à enrouleur pour vitre selon la revendication 18, **caractérisé par le fait que** la section de la rainure de guidage (28) se compose d'une cavité de rainure (29) et d'une fente de rainure (30), le diamètre de la cavité de rainure (29) étant supérieur à la largeur intérieure de la fente (30), de manière à créer une rainure de guidage (28) en contre-dépouille.

20. Store à enrouleur pour vitre selon la revendication 19, **caractérisé par le fait que** l'élément de poussée (38, 39) est guidé dans la cavité de rainure (29) en étant protégé contre le flambage.

21. Store à enrouleur pour vitre selon la revendication 1, **caractérisé par le fait que** l'élément de poussée (38, 39) présente une denture périphérique (42).

22. Store à enrouleur pour vitre selon la revendication 1, **caractérisé par le fait que** la roue dentée d'entraînement (47, 48) est une roue dentée droite.

23. Store à enrouleur pour vitre selon la revendication 1, **caractérisé par le fait qu'**il est prévu des moyens qui sont conçus pour maintenir l'élément de poussée (38, 39) respectif en prise avec sa roue dentée d'entraînement (47, 48) associée.

24. Store à enrouleur pour vitre selon la revendication 1, **caractérisé par le fait qu'**un carter d'engrenage distinct est prévu pour chaque roue dentée d'entraînement (47, 48).

25. Store à enrouleur pour vitre selon la revendication 1, **caractérisé par le fait qu'**il est prévu pour chaque élément de poussée (38, 39) un tube de rangement (61, 62) distinct qui reçoit le tronçon non chargé de l'élément de poussée (38, 39) lorsque le store est enroulé.
